Europäisches Patentamt

European Patent Office

Office européen des brevets

(11) Publication number: **0 205 860**
**A1**

# (12) EUROPEAN PATENT APPLICATION

(21) Application number: 86106331.1

(22) Date of filing: 09.05.86

(51) Int. Cl.⁴: **F 16 H  7/18, B 62 M  9/02**

| | |
|---|---|
| (30) Priority: 24.06.85  IT 2224685 U | (71) Applicant: **PIRELLI TRASMISSIONI INDUSTRIALI S.p.A., Piazzale Cadorna, 5, I-20123 Milan (IT)** |
| (43) Date of publication of application: 30.12.86 Bulletin 86/52 | (72) Inventor: **Macchiarulo, Vincenzo, Via Madonna della Misericordia, 56, I-66100 Chieti (IT)** Inventor: **Scalzo, Francesco, Via Dei Vestini, 176, I-66100 Chieti (IT)** |
| (84) Designated Contracting States: **AT BE DE FR GB NL SE** | (74) Representative: **Mariani, Giorgio, Dr. et al, INDUSTRIE PIRELLI S.p.A. Direzione Brevetti Piazzale Cadorna, 5, I-20123 Milano (IT)** |

(54)  **Improvements in the synchronous transmissions.**

(57)  Transmission (1) comprising a toothed flexible belt (2), and at least two pulleys (3) and (4) characterized by the fact of comprising means for withstanding skipping phenomenon of the belt engaging with the pulley. Preferably said means are constituted by a roller (10) having a cylindrical shape which is opposite to the pulley (4) at the zone defined by the first half of the winding arc of the belt (2) on the pulley (4); the distance of the roller (10) from the belt face being comprised in arange of values comprised between two thirds ($=2/3$) of the belt tooth heigh up to zero.

1

# IMPROVEMENTS IN THE SYNCHRONOUS TRANSMISSIONS

## Description

The present application is directed to some improvements in the synchronous transmissions comprising at least a toothed belt of flexible polymeric material and at least two pulleys.

More precisely the present application is directed to some improvements for avoiding the skipping phenomen of the belt engaging with the grooves of the pulley.

As known, the toothed belts transmit with synchronism all the power to the pulleys of the transmission without rubbings and slidings.

It is also known how it is important for the power synchronous transmission the perfect and continuous engagement of the belt teeth between the grooves of the pulleys and consequently it is also known to the skilled in the art how it is undesired in a synchronous transmission the escape of one of the belt teeth from the pulley groove where the tooth of the belt engages even before the step of final disengagement from the winding arc of the belt on the pulley.

In fact the skipping phenomenon turns into a distribution of the whole force transmitted between the belt and the pulley in a smaller number of teeth than that planned.

This situation favours the disengagement of other teeth from the engaging step with the consequent definite loss not only of the synchronism, but also of the transmission of motion.

As known, the cited drawback cannot be completely accepted in particular applications for instance when the synchronous transmission is used in the control of the distribution in an internal-combustion engine.

2

In several known solutions, in order to avoid the cited drawback, the recourse is made to a preliminary stretching between the belt and the two pulleys of the transmission.

This solution practically consists of a certain pre-determined relative moving away between the shaft of the driven pulley and the shaft of the driving pulley so as to stretch the two branches of the belt wound around the pulleys.

If on the one hand the cited solution tends to avoid the skipping phenomenon, on the other has the drawback of not maintaining constant in time the pre-determined distance and/or the stretching of the belt between the two pulleys due to the vibrations given to the system comprising the transmission or due to unexpected inclinations between the axes of the two pulleys, or due to natural settlings among the materials.

Therefore the cited transmission needs a continuous maintenance that besides represents a cost for the user of the transmission since the cited operations for resetting the desired distance between the two pulleys involve mechanical steps that can be carried out by skilled persons.

There are further transmissions in which a suitable circular element known as jockey pulley is urged into contact with the face of the loose branch of the belt so as to determine a continuous pressure on the cited side of the belt.

By making recourse to this solution it is possible to increase the winding arc of the belt around the contiguous pulleys obtaining thus a greater number of teeth acting within the grooves of the contiguous pulleys with the consequence of considerably reducing the risk of the skipping phenomenon of the belt since the total stress transmitted between the belt and the pulley is distributed on a greater number of teeth.

This solution, although being satisfactory in many applications, can result to be very complicated in other applications since often it requires particular supports.

Often it has been noted that it is not possible to maintain in time the stretching degree wished for the belt.

Moreover the previous solution involves a continuous strong rubbing with very high pressure values between the belt face of elastomeric material or like material and the outer surface of the jockey pulley producing thus a wearing-out between the materials in contact and causing also a power loss for the rotation of the jockey pulley.

Moreover it is understood that the addition of a jockey pulley represents in any case an increase of the bending cycles in the unit of length of the belt.

Also as it is understood, the cited wearing out of the materials turns into a shorter lifetime of the belt or in a possible cause of irregular working of the transmission owing to the need of making recourse to a continuous adjustment of the positioning of the jockey pulley in connection with the state of wearing-out on the belt face.

There are also further solutions in which the jockey pulley can be arranged under elastic pressure on the belt face, i.e. is pushed by a suitable spring so as to counterbalance possible misalignments and/or separations between the outer surface of the jockey pulley and the belt face.

However this latter solution causes a considerable complexity both for the realization of all the means necessary for supporting the jockey pulley, the spring, the end connections of the spring, and for the narrow space where said transmission can be positioned.

4

Therefore the aim of the present application is to provide some improvements in the synchronous transmissions comprising a toothed belt of flexible polymeric material and at least two pulleys, devoid of the previously cited drawbacks.

The object of the present application is a synchronous transmission comprising a belt of polymeric material provided with a plurality of longitudinal, parallel and inextensible inserts embedded in the belt body and a plurality of teeth projecting from the belt body and at least two pulleys, a driving and a driven one, each pulley being provided with teeth alternating to grooves in which the belt teeth engage, characterized by the fact of comprising means for withstanding the skipping phenomenon of the belt engaging with the pulley, said means being opposite to the pulley at the zone defined by th first half of the winding arc of the belt on the pulley, the distance of said means from the belt face being comprised in a range of values comprised between two thirds (2/3) of the belt tooth height up to zero.

The present application will be better understood by the following detailed description made by way of non-limiting example with reference to the figures of the attached sheets of drawings in which:
- figure 1 shows a synchronous transmission and the means for avoiding the skipping phenomenon of a toothed belt;
- figure 2 shows a cross section of a particular embodiment of the means of figure 1;

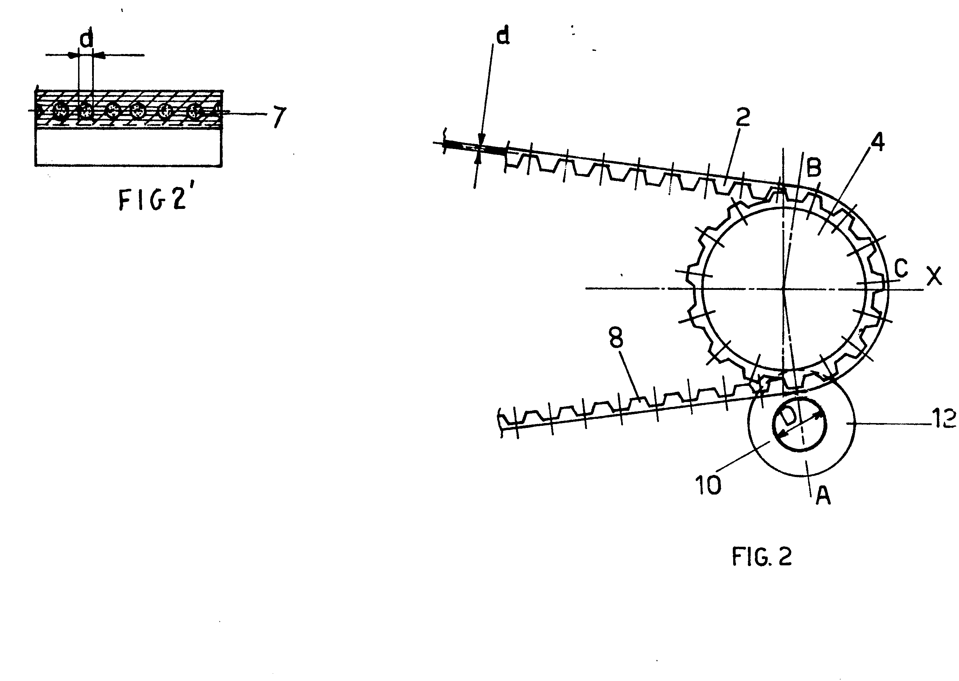

- figure 2' shows in the belt cross section the arrangement of the strands of the longitudinal resistant insert;

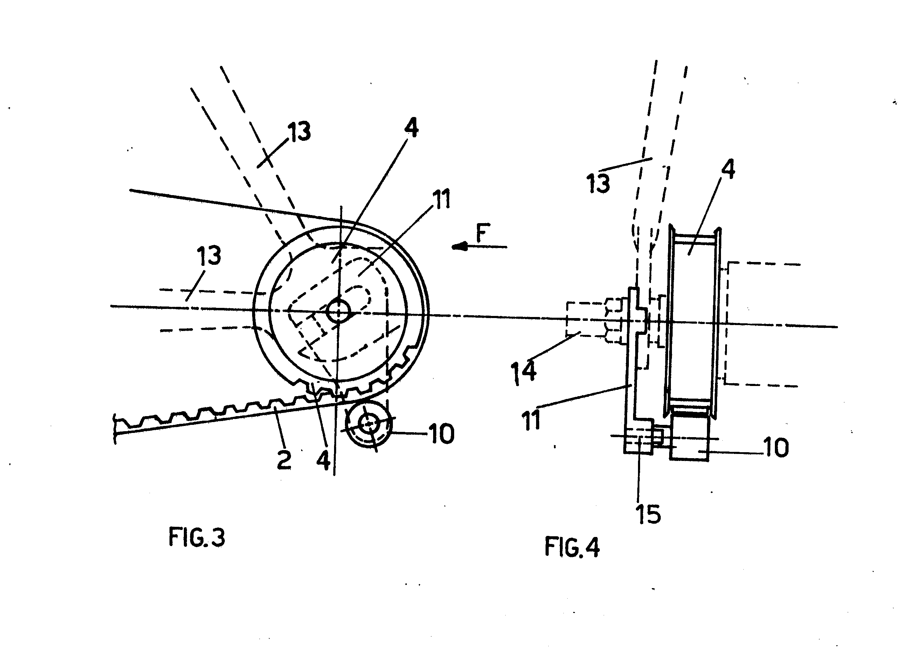

- figures 3 and 4 partially show in longitudinal view and in a view according to the arrow F of figure 3 the present transmission mounted on a bicycle.

In figure the reference numeral 1 indicates a synchronous transmission comprising a belt 2 of flexible polymeric material, in particular elastomeric material, and at least two pulleys, a driving pulley 3 and a driven pulley 4 provided with teeth 5 alternating to grooves 6. In the present specification the term flexible polymeric material means an elastomeric or plastomeric material, for instance polyurethane or more generally rubber.

The belt comprises a resistant insert formed by a plurality of parallel and inextensible longitudinal elements 7, embedded in the belt body, and a plurality of teeth 8 projecting from the belt body to engage with the grooves of the two driving and driven pulleys.

The inserts can be in the form of cords or strands or metal wires or textile threads or glass fibers having transversal dimension "d" (figure 2') according to the charges to be transmitted, for instance with dimensions "d" comprised between 0.2 and 3 mm.

The elastomeric material of the belt can have a hardness comprised between 55 and 90 Shore A. If for instance the polymeric material should be polyurethane, the hardnesses can be comprised between 65 and 90 Shore A or also for instance it is possible to have belts of polyurethane with hardnesses comprised between 20 and 50 Shore D.

The synchronous transmission 1 is characterized by the fact of comprising means for withstanding the skipping phenomenon of the belt engaging with the pulley, in the example with the driven pulley 4.

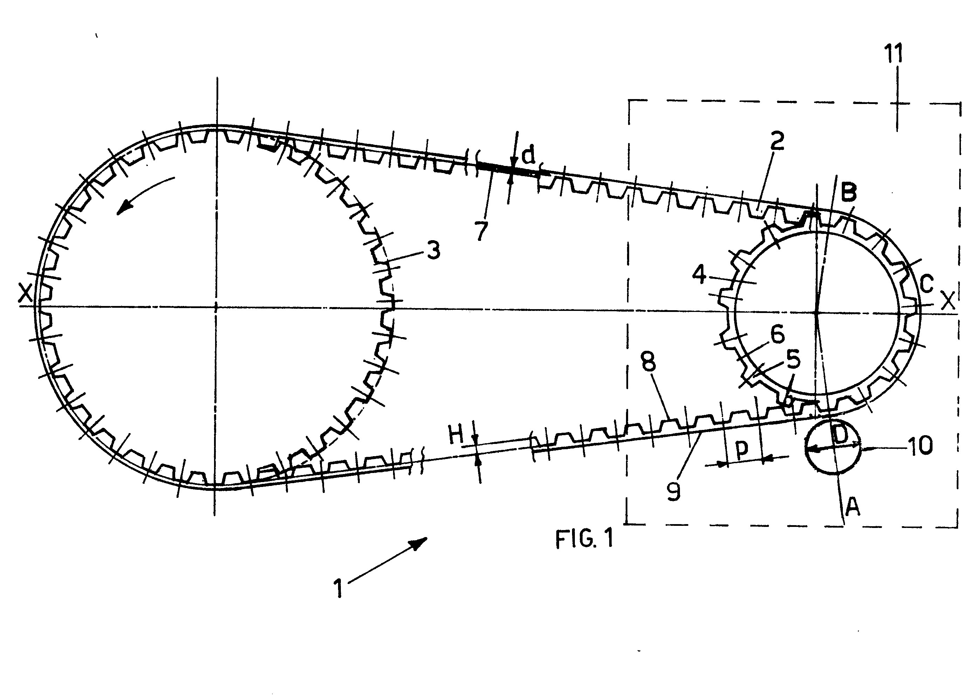

In their most general solution, the means have a distance from the face (9) of the belt comprised in a range of values that is comprised between two thirds (2/3) of the belt tooth height and zero with a light pressure on the belt face; in particular said means are in opposite position to the

6

pulley, in proximity of the arc where the skipping phenomenon may occcur. In particular, in the example of figure 1 said means are in opposite position to the driven pulley at the zone defined by the first half of the winding arc of the belt on the driven pulley.

In figure 1 the winding arc of the belt is smaller than 180° and is comprised between points A and B.

The half of the winding arc of the belt on the driven pulley is represented by the arc A C delimited between the line X-X connecting the centres of the two driving and driven pulleys, and the direction of the radius of the driven pulley passing through the first belt tooth in the access period or as in figure 1 through the pulley tooth pushed by the first cited belt tooth.

The means for withstanding the skipping phenomenon are preferably at a distance from the belt face and their distance or gap is never greater than two thirds of the heigh H of the belt (2/3 H).

Hereinafter the height H of the belt is that measured in correspondence of one rectilinear branch of the belt, between the root and the most projecting end of the belt tooth.

For instance in a belt having the pitch of 8 mm, the height can be of 3.2 mm in a transmission with ratio 1 to 2.

The means could be at the most just in contact with the belt face with a low pressure; preferably it is intended to avoid any contact so as not to have high specific pressures on the belt face in consequence of thermal expansions.

The minimum distance between the means apt to withstand the skipping phenomenon and the belt face to avoid the occuring of high specific pressures in consequence of thermal expansions, is of 0.2 mm.

7

In particular the means for withstanding the skipping phenomenon have the resultant of the mechanical thrusts, acting on the belt face, aligned with the radius of the driven pulley that defines the first groove or the adjacent tooth of the same pulley engaging with the first access tooth of the belt at the winding zone.

Preferably the means are in the form of a roller 10, having a cylindrical shape, of metal or rigid resin, mounted on a shaft parallel to the axis of the two pulleys.

In particular in the preferred solution the roller 10 can be idly arranged on a support 11, mounting the driven pulley, and represented with a broken line in figure 1.

It has been found suitable to assign to the width of the roller a value selected in connected with the width of the belt and precisely the invention is characterized by the width of the roller 10 which is greater or at the most equal to a third of the width of the belt face 9.

Also, preferably, the roller 10 has a dimension that fits the dimension of one of the characteristic elements of the belt and precisely the transversal dimension of the longitudinal insert.

Consequently, by indicating with "d" the diameter of each belt longitudinal insert and with "D" the outermost diameter of the roller 10, the following formula is obtained:

$$D > 10\ d \quad \text{(D is more than or equal to 10 d)}$$

The transmission shown in figure 1 can also comprise a roller 10 provided with at least a lateral flange 12 to prevent lateral movements of the belt in axial direction to the driven pulley (figure 2).

8

Furthermore the transmission can be characterized by the fact of comprising a roller 10 provided with two lateral flanges apt to prevent the belt from moving laterally in axial direction to the driven pulley in both the possible directions of movement.

In this latter solution the driving and driven pulleys are devoid of lateral flanges.

Figures 3 and 4 show moreover a particular example of the present transmission applied to the driven wheel of a bicycle.

As shown in the figures, on the axis of the driven wheel there is mounted the support 11 which is on its turn tightened against the back chassis 13 by a nut 14.

The roller 10 is disposed on a suitable spindle 15 projecting from the end of the support 11 and at a distance from the belt 2 according to gap values previously indicated.

The invention permits to reach the aimed purposes.

In fact the present transmission avails itself of particular means apt to withstand the skipping phenomenon through a localized distribution that does not modify the winding of the two branches of the belt around the pulleys and is of immediate application in an outer position and opposite to one of the two pulleys.

Moreover the cited means, in the preferred embodiment realized through the roller 10, constitute a temporary operative element intervening only in the transient steps connected with the starting of the transmission or in the acceleration steps or more generally in all those conditions where the sudden variations of torque transmitted between the belt and pulleys can cause the skipping phenomenon of the belt.

9

Therefore in the present application the drawbacks found in the past in respect of a continuous rubbing with a high pressure between the jockey pulley and the belt face with the consequent wearing-out of the materials of one or of the other device are not present.

The foregoing produces both a longer lifetime of the present transmission and the absence of a continuous maintenance and/or control operations for checking the wearing-out of the materials and finally a greater improvement of the transmission efficiency.

In practice, the maintenance of the present transmission is reduced more or less to a simple visual control that can be easily and immediately carried out by any whatsoever device pre-arranged for this purpose, for instance through a gauge to be introduced between the roller 10 and the belt face 9 to control the gap value between the cited opposite elements.

This favourable situation is due to the fact that the cited means for avoiding the skipping phenomenon of the belt are all outside and preferably at a distance from the loose branch of the belt so that in a complicated transmission as could be that for the control of the distribution in an inner combustion engine, it is possible for the vehicle driver to visually verify the desired distance between the roller and the belt face.

It is also evident that it is advantageously possible to arrange the roller 10 with its own shaft mounted on appropriate grooves (not shown) of the support 11 in order to change the distance of the roller 10 from the belt face 9 in the range of values comprised between a contact without pressure on the belt face up to a distance of the belt face equal or anyhow not higher than two thirds (2/3) of the height H of the tooth-belt.

10

Then there is stressed that the optimal results in respect of a longer lifetime of the whole transmission and of the consequent less need of intervening for maintenance or resetting operations for having a correct transmission can derive from the preferred characteristics of the transmission.

In fact the selection of a gap between the roller 10 and the belt face 9 with a value smaller than two thirds (2/3) of the height H of the belt guarantees the correct engagement between the belt teeth and the driven pulley grooves in all the exercise conditions.

In fact the Applicant has found that the gap values greater than the cited ones could cause, in the presence of the tendency of the skipping phenomenon, a very forced compactness condition of the tooth elastomeric material to which condition the skipping phenomenon between the belt tooth and the pulley groove could actually occur, owing to a very forced variation of torque.

Therefore, a correct working of the transmission is guaranteed by the cited preferred selection of the gap value and no intervention of any type is necessary.

The gap value keeps advantageously into account the further circumstances that cannot be easily foreseen and found only fortuitously by the Applicant.

In fact it is ascertained that in some applications relating to the synchronous transmissions used in the inner combustion engines it is possible to reach differences of temperature of the order of 100°C and more particularly in respect of the outer ambient with consequent expansion of the material supporting the devices of the synchronous transmission.

By having defined that the distance of the roller is not greater than two thirds (2/3) of the height H of the tooth, the critical value of the gap of the present invention keeps into account, from the beginning, of the possible thermal expansions to which the support 11 could be subjected avoiding thus that a relative moving away between the axis of the driven pulley and the roller shaft due to thermal differences favours the skipping phenomenon in presence of torque variations.

Moreover, it is ascertained that the characteristic of maintaining the width of the roller 10 greater and anyhow preferably never smaller than one third (1/3) of the width of the belt face is suitable for the aims of the present invention.

This favourable characteristic appears for example in all those cases in which the present transmission is applicable to the bicycles where usually a certain temporary engagement by the cyclist to produce an intense and quick muscular stress to overcome an obstacle is provided for.

In this circumstance the variation of mechanical torque between the belt and the driven pulley could tend to move away the first tooth of the belt from the relative pulley groove untill the belt face is not get into contact with the cylindrical surface of the roller 10; however, due the to fact that the roller 10 has a sufficiently wider lateral surface, a lateral bend of the belt portion not supported by the roller is avoided in this position.

In fact it is found that the belt portions supported by the roller for more than one third (1/3) of the belt width tend to prevent the not supported portions from suffering a relative moving away.

It is thus understood that the extension of the width of the roller 10 beyond the cited lower limit, preventing the belt face from suffering cyclic lateral bends due to frequent muscular engagements by the cyclist, avoids the accentuated distorsion of the elastomeric material of the belt favouring thus the relative correct positioning among the longitudinal inserts and the consequent long lifetime of the whole transmission.

Then, the specific relationship between the diameter "D" of the roller 10 and the maximum transversal dimension "d" of each resistant insert can be important for the purposes of the invention.

In fact it is ascertained that in presence of stresses of any intensity with equal conditions if the diameter of the roller is greater at least ten times than the transversal dimensions of the resistant insert, the lifetime of the belt is greatly extended.

In practice, when the belt tooth moves away from the correct engaging position, i.e. the belt comes into contact with the roller, the belt face results to be disposed on a surface delimited by a curvature which is always compatible with the mechanical resistance characteristics of the resistant insert and this favourable condition occurs either the resistant insert is constituted by textile fibers, or metal wires or glass fibers.

A further advantageous solution of the present innovation is that in which the roller 10 accomplishes two functions, a transient one relating to its intervention for avoiding the skipping phenomenon of the belt, and a continuous one due to the presence of two lateral flanges apt to withstand in any moment the axial movements of the belt in respect of the two pulleys devoid on their turn of the lateral flanges.

According to this solution, due to the cited absence of the flanges on the pulleys, there occurs a total lightening of the transmission that advantageously is reflected on the

13

reduction of the suspended masses according to a very sought-after and desired characteristic in the field of the motorvehicles in general, in particular in the field of the motor-cars where the present transmission could be applied.

In particular, the present transmission in all the possible field of application can be used without a starting pre-stretching of the belt or at least can be used reducing the pre-stretching condition.

If for instance in the solution of the state of the art the two pulleys are moved away so as to have a nominal pre-stretching on the two branches of the belt, by means of the present solution it is found that a starting pre-stretching could be reduced to 20% with respect to the nominal one relying then on the presence of the roller 10 to eliminate the risk of the skipping phenomen.

Although some particularly advantageously embodiments of the present application have been described, it is understood that the present invention can include in its scope any other alternative embodiment accessible to a skilled in the art.

1

# C L A I M S

1.       Synchronous transmission (1) comprising a belt (2) of polymeric material provided with a plurality of parallel and inextensible longitudinal inserts (7) embedded in the belt body and a plurality of teeth (8) projecting from the belt body and at least two pulleys, a driving one (3) and a driven one (4), each pulley being provided with teeth (5) alternating to groove (6) in which the belt teeth (8) engage, characterized by the fact of comprising means for withstanding the skipping phenomenon of the belt engaging with the pulley, said means being opposite to the pulley at the zone defined by the first half of the winding arc of the belt on the pulley, the distance of said means from the belt face being comprised in a range of values comprised between two thirds (2/3) of the belt tooth height up to zero.

2.       Synchronous transmission as in claim 1, characterized by the fact that the resultant of the thrusts transmitted by said means to withstand the skipping phenomenon, when the tooth moves away from the engaging position, is aligned with the radius of the pulley defining the first groove or the adjacent tooth of the pulley engaging with the first access tooth of the belt at the winding zone.

3.       Transmission as in claim 1 or 2, characterized by the fact of comprising a gap value between the belt face (9) and said means for withstanding the skipping phenomenon of at least 0.2 mm.

4.       Transmission as in any one of the preceeding claims, characterized by the fact that said means comprise a roller (10) having a cylindrical shape and mounted on a shaft parallel to the axis of the pulleys of the transmission.

2

5. Transmission as in claim 4, characterized by the fact that said roller is idly mounted.

6. Transmission as in claim 4 or 5, characterized by the fact that the width of the roller measured along a generatrix is greater or at most equal to a third of the width of the belt face.

7. Transmission as in claim 4 or 5 or 6 characterized by the fact that the ratio between the roller diameter and the maximum transversal dimension of each longitudinal insert embedded in the belt body has a minimum value equal to 10.

8. Transmission as in any one of the preceeding claims, characterized by the fact that said roller comprises at least a lateral flange (12) to prevent the belt from laterally moving in axial direction to the pulleys.

9. Transmission as in any one of the preceeding claims from 4 to 8, characterized by the fact that said roller comprises two flanges and said pulleys are devoid of lateral flanges.

10. Transmission as in any one of the preceeding claims, characterized by the fact that the belt is mounted on the pulleys without being pre-stretched.

FIG. 1

d

7

FIG 2'

d

2

4

B

C

X

8

12

10

A

FIG. 2

0205860

FIG.3

FIG.4

0205860

European Patent
Office

**EUROPEAN SEARCH REPORT**

Application number

| | DOCUMENTS CONSIDERED TO BE RELEVANT | | EP 86106331.1 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | GB - A - 885 427 (BROOKE)<br>* Totality *<br>-- | 1,4,5 | F 16 H 7/18<br>B 62 M 9/02 |
| A | US - A - 1 584 198 (STEVENS)<br>* Totality *<br>-- | 1 | |
| A | US - A - 2 718 153 (DEAN)<br>* Totality *<br>-- | 1,4,5 | |
| A | EP - A2 - 0 077 467 (FERAMATIC)<br>* Totality *<br>-- | | |
| A | AT - B - 295 941 (RCA)<br>* Totality *<br>-- | | |

TECHNICAL FIELDS
SEARCHED (Int. Cl.4)

| Category | Citation | Relevant | Fields |
|---|---|---|---|
| A | DE - C - 262 941 (KAISER)<br>* Totality *<br>-- | | B 62 J 13/00<br>B 62 J 23/00 |
| A | GB - A - 988 238 (LANGSTON CY.)<br>* Totality *<br>-- | | B 62 J 27/00<br>B 62 M 9/00 |
| A | US - A - 1 282 118 (ORNBERG)<br>* Totality *<br>---- | | F 16 H 7/00 |

The present search report has been drawn up for all claims

| Place of search | Date of completion of the search | Examiner |
|---|---|---|
| VIENNA | 08-09-1986 | SCHATEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82